# EUROPEAN PATENT APPLICATION

(11) **EP 2 363 335 A1**
(43) Date of publication of application: **07.09.2011**
(21) Application number: 10155294.1
(22) Date of filing: 03.03.2010
(51) Int. Cl.: B62B 9/00

(54) **Clamp-proof joint**

(71) Applicant: Wu, Sung-Tsun, Pan Chiao City, Taipei Hsien (TW)
(72) Inventor: Wu, Sung-Tsun, Pan Chiao City, Taipei Hsien (TW)
(74) Representative: Gee, Steven William

(57) **Abstract**

A clamp-proof joint for a pushchair is provided. The clamp-proof joint is assembled between two fulcrum bars of the pushchair. The clamp-proof joint includes a joint socket and at least one joint head. The joint socket includes a baffle portion and a filling portion. The baffle portion and the filling portion are configured at opposite sides of the joint socket. The joint head is configured with an arc-shaped surface. The joint head is pivotally coupled to a hinge at one end of the joint socket. The joint head is further fixedly coupled to a fulcrum bar, so that the fulcrum bar is adapted for pivotally rotating with the hinge of the joint socket as a pivot thereof.

## Description

### 1. Field of the Invention

The present invention relates generally to a clamp-proof joint, and more particularly, to a clamp-proof joint for a pushchair.

### 2. The Prior Arts

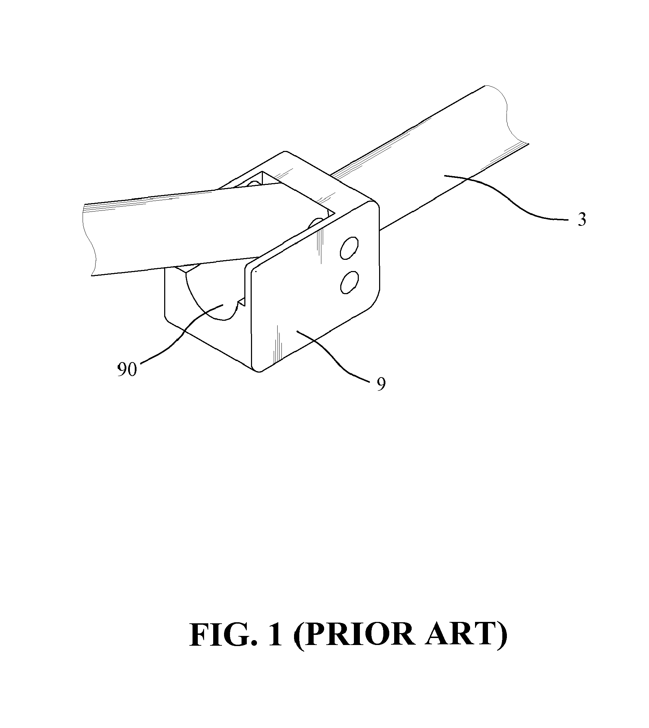

Generally, most baby pushchairs are equipped with foldable joints so that the baby pushchairs can be folded up for the convenience of conservation or carrying when they are not in use. Fig. 1 illustrates a conventional foldable joint employed in conventional baby pushchairs. Referring to Fig. 1, the foldable joint is substantially constituted of a fulcrum bar 3, and a joint socket 9. The fulcrum bar 3 is pivotally coupled to a hinge of the joint socket 9, and is adapted for taking the hinge as a pivot to rotate. When the fulcrum bar 3 is operated to fold or unfold, it often pivotally rotates relative to the joint socket 9, during which a large gap 90 often presents therebetween. When a user incautiously folds up the pushchair, his hands are in the risk of being clamped or even get injured in the gap 90. When any incident accidentally causes the pushchair to fold up, this gap may even hurt the baby seated in the pushchair.

### SUMMARY OF THE INVENTION

Accordingly, a primary objective of the present invention is to provide a clamp-proof joint for a pushchair as a solution regarding the problems of the foldable joint for the conventional pushchairs.

Accordingly, the present invention provides a clamp-proof joint for a pushchair. The clamp-proof joint is assembled between two fulcrum bars of the pushchair. The clamp-proof joint includes a joint socket and at least one joint head. The joint socket includes a baffle portion and a filling portion. The baffle portion and the filling portion are configured at opposite sides of the joint socket. The joint head is configured with an arc-shaped surface. The joint head is pivotally coupled to a hinge at one end of the joint socket. The joint head is further fixedly coupled to a fulcrum bar, so that the fulcrum bar is adapted for pivotally rotating with the hinge of the joint socket as a pivot thereof.

The baffle portion has a first edge and the filling portion has a second edge. According to an embodiment of the present invention, the first edge, the second edge, and the arc-shaped surface of the joint head are adaptively configured, such that when the joint head pivotally rotates relative to the joint socket, the first edge and the second edge remain substantially tangent with the arc-shaped surface with tiny gaps therebetween.

In such a way, the present invention provides a clamp-proof safety feature to the user. When the user is going to fold up or unfold the pushchair, he can turn the fulcrum bar to pivot it on where the joint socket is coupled with the joint head. Because of the provision of the baffle portion and the filling portion, when the fulcrum bar is operated to rotate, there are only tiny gaps presented between the arc-shaped surface of the joint head, and the baffle portion and the filling portion. The size of such tiny gaps are specifically designed such that they allow the joint head to smoothly rotate thereby without causing any contact of the arc-shaped surface with the baffle portion and the filling portion. At the same time, the size of the tiny gaps is small enough so that fingers of the user or even a baby seated in the pushchair are prevented from indeliberate insertion therein.

### BRIEF DESCRIPTION OF THE DRAWINGS

The present invention will be apparent to those skilled in the art by reading the following detailed description of preferred embodiments thereof, with reference to the attached drawings, in which:

Fig. 1 is a perspective view of a conventional foldable joint for a pushchair;

Fig. 2 is a perspective exploded view of a clamp-proof joint for a pushchair according to an embodiment of the present invention;

Fig. 3 is a schematic view showing an operation status of the clamp-proof joint according to an embodiment of the present invention;

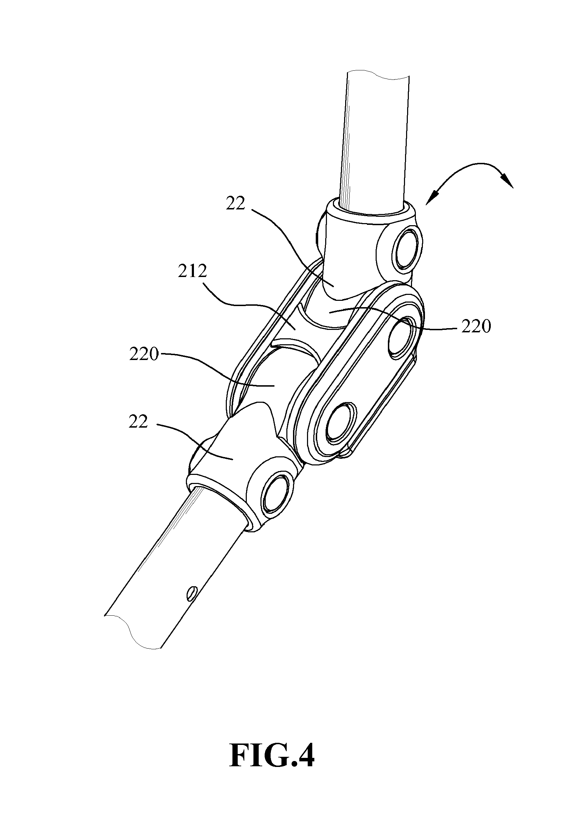

Fig. 4 is a schematic view showing another operation status of the clamp-proof joint according to an embodiment of the present invention;

Fig. 5 is a perspective view showing an operation status of pushchair employing the clamp-proof joint according to an embodiment of the present invention; and

Fig. 6 is a perspective view showing another operation status of pushchair employing the clamp-proof joint according to an embodiment of the present invention.

### DETAILED DESCRIPTION OF THE PREFERRED EMBODIMENT

The accompanying drawings are included to provide a further understanding of the invention, and are incorporated in and constitute a part of this specification. The drawing illustrates embodiments of the invention and, together with the description, serves to explain the principles of the invention.

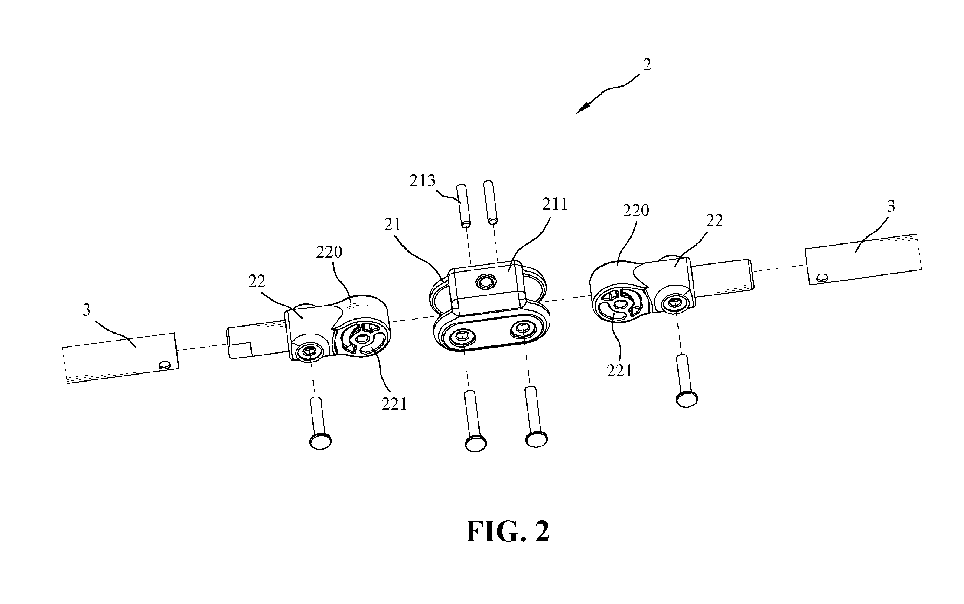

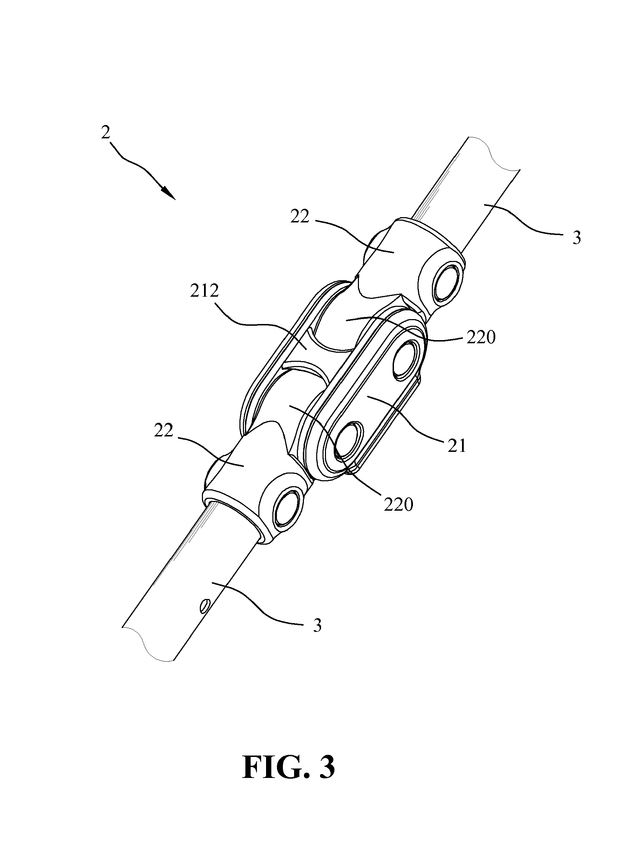

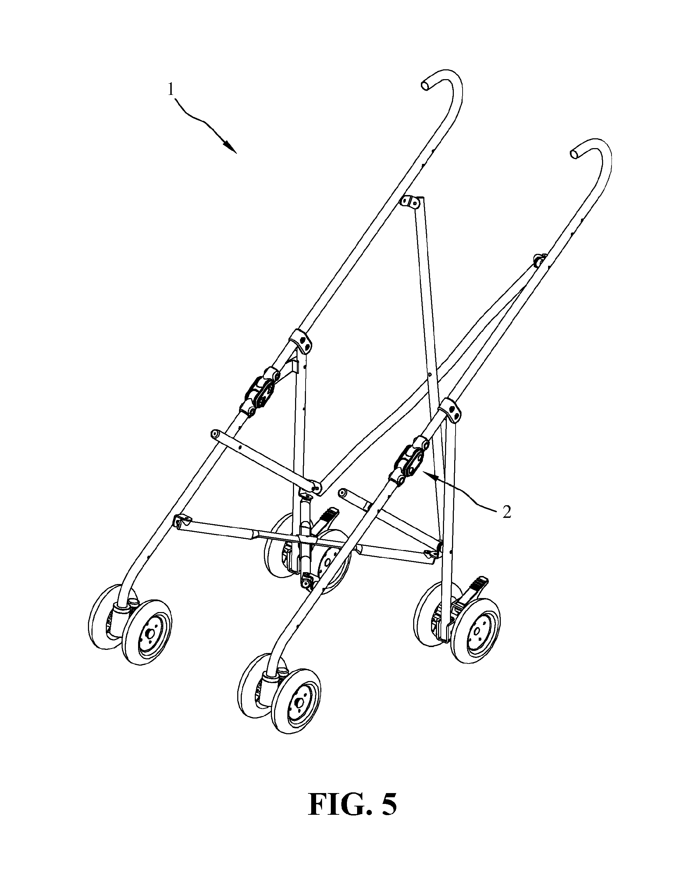

Fig. 2 is a perspective exploded view of a clamp-proof joint for a pushchair according to an embodiment of the present invention. Fig. 3 is a schematic view showing an operation status of the clamp-proof joint according to an embodiment of the present invention. Fig. 5 is a perspective view showing an operation status of pushchair employing the clamp-proof joint according to an embodiment of the present invention.

Referring to Figs. 2, 3, and 5, there is shown a pushchair 1 including at least one fulcrum bar 3 and a clamp-proof joint 2. As exemplified in the embodiments as shown in Figs. 2, 3, and 5, two clamp-proof joints 2 are employed in the pushchair 1, and each clamp-proof joint 2 is assembled to connect two fulcrum bars 3. However, it is worth mentioning that in fact more, or maybe less, clamp-proof joints 2 are preferred to be used in a pushchair, and a clamp-proof joint 2 can be used for connecting more or less fulcrum bars 3.

The clamp-proof joint 2, as shown in Figs. 2, 3, and 5, is connected between two or more fulcrum bars 3. The clamp-proof joint 2 includes a joint socket 21, and at least one joint head 22. The joint socket 21 includes a baffle portion 211 and a filling portion 212. The baffle portion 211 and the filling portion 212 are configured at opposite sides of the joint socket 21. The joint head 22 is configured with an arc-shaped surface 220. The joint head 22 is pivotally coupled to one end of the joint socket 21. The joint head 22 is further fixedly coupled to a fulcrum bar 3, so that the fulcrum bar 3 is allowed for pivotally rotating with the end of the joint socket 21 as a pivot thereof.

The baffle portion 211 has a first edge and the filling portion 212 has a second edge. According to an embodiment of the present invention, the first edge, the second edge, and the arc-shaped surface 220 of the joint head 22 are adaptively configured, such that when the joint head 22 pivotally rotates relative to the joint socket 21, the first edge and the second edge remain substantially tangent with the arc-shaped surface 220 with tiny gaps left therebetween as shown in Fig. 3.

According to an aspect of the embodiment, the joint head 22 further includes at least one positioning slot 221, and a positioning thumb latch 231. The positioning slot 221 is configured as a segment of a circle with a center at where the socket head 22 is pivotally connected to the joint socket 21. The positioning thumb latch 231 is fixed to the joint socket 21 and movably coupled through the positioning slot 221 of the joint head 22. Therefore, the length of the positioning slot 221 restrains the positioning thumb latch 231 to be movable therebetween. In such a way, the joint head 22 (the fulcrum bar 3) is restricted to be rotatable relative to the joint socket 21 within a predetermined range.

In operation, when a user is going to fold up or unfold the pushchair 1, he can turn the fulcrum bar 3 to pivot it on where the joint socket 21 is coupled with the joint head 22. Because of the provision of the baffle portion 211 and the filling portion 212, when the fulcrum bar 3 is operated to rotate, there are only tiny gaps presented between the arc-shaped surface 220 of the joint head 22, and the baffle portion 211 and the filling portion 212. The size of such tiny gaps are specifically designed such that they allow the joint head 22 to smoothly rotate thereby without causing any contact of the arc-shaped surface 220 with the baffle portion 211 and the filling portion 212. At the same time, the size of the tiny gaps is small enough so that fingers of the user or even a baby seated in the pushchair 1 are prevented from indeliberate insertion therein.

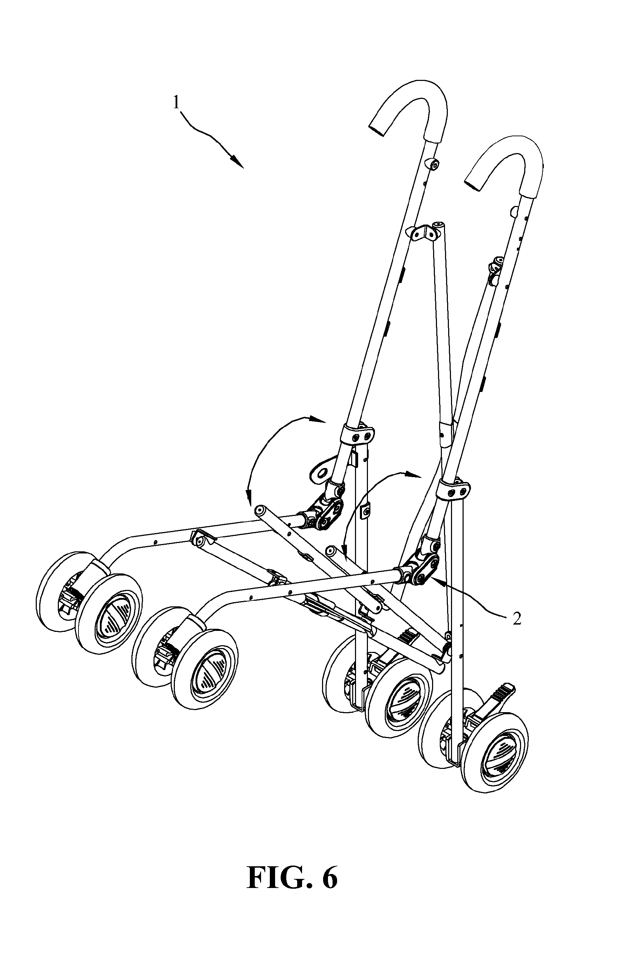

Further, as shown in Figs. 5 and 6, comparing with the conventional foldable joint having the large gap 90, the clamp-proof joint 2 having the tiny gaps looks more exquisite. Therefore, the pushchair 1 employing the clamp-proof joint 2 also looks more attractive.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A clamp-proof joint for a pushchair, comprising:
a joint socket, comprising a baffle portion and a filling portion respectively configured at two opposite sides of the joint socket, wherein the baffle portion has a first edge and the filling portion has a second edge;
a joint head, having an arc-shaped surface, and being pivotally coupled to a hinge at one end of the joint socket, wherein the joint head is fixedly coupled to a fulcrum bar of the pushchair, so that the fulcrum bar is adapted for pivotally rotating with the hinge of the joint socket as a pivot,
wherein the first edge of the baffle portion and the second edge of the filling portion are positioned adjacent to the arc-shaped surface of the joint head, such that when the joint head pivotally rotates relative to the joint socket, the first edge and the second edge remain substantially tangent with the arc-shaped surface with tiny gaps therebetween;
wherein a size of the tiny gaps are specifically designed such that the joint head is allowed to smoothly rotate without causing any contact of the arc-shaped surface with the baffle portion and the filling portion, and the size of the tiny gaps is substantially smaller than a size of fingers of a baby, with whom the pushchair is designed to carry.

2. The clamp-proof joint as claimed in claim 1, wherein the joint head further comprises a positioning slot, and a positioning thumb latch, wherein the positioning slot is configured as a segment of a circle with a center at the hinge, and the positioning thumb latch is fixed to the joint socket and movably coupled through the positioning slot of the joint head, wherein the positioning slot restrains the positioning thumb latch to be movable within a longitudinal range of the positioning slot, and the joint head or the fulcrum bar is restricted to be rotatable relative to the joint socket within a predetermined range.
